# EUROPÄISCHE PATENTANMELDUNG

(11) **EP 1 752 254 A1**
(43) Veröffentlichungstag der Anmeldung: **14.02.2007**
(21) Anmeldenummer: 06013289.1
(22) Anmeldetag: 28.06.2006
(51) Int. Cl.: B23Q 11/10, B01D 21/00

(54) **Hochdruckanlage für Kühlschmierstoffe**

(30) Priorität: 29.06.2005 DE 202005010341 U
(71) Anmelder: Müller, Peter, 78655 Dunningen (DE)
(72) Erfinder: Müller, Peter, 78655 Dunningen (DE)

(57) **Zusammenfassung**

Hochdruckanlage für Kühlschmierstoffe, dadurch gekennzeichnet, dass die Hochdruckanlage über einem Tank, der als Mehrkammer-System ausgeführt ist, verfügt, eine separate Pumpe (1) die verschmutzte Flüssigkeit ansaugt, die diese in die erste Kammer (2) des Tanksystems fördert, besitzt und die Hochdruckpumpe (7) die vorgereinigte Flüssigkeit der letzten Kammer (6) des Systems entnimmt.

## Beschreibung

Die Erfindung betrifft Anlagen zur Reinigung und Hochdruckerzeugung von Kühlschmierstoffen. Insbesondere dienen diese Anlagen als Zusatzgeräte für Bearbeitungsmaschinen, die mit spanabhebenden Werkzeugen arbeiten.

Hochdruckeinheiten für Kühlschmierstoffe üblicher Bauart sind als Systeme aus Motor-Zahnradpumpen-Kombination mit vorgeschaltetem Saugfilter aufgebaut. Die Einstellung des benötigten Druckes erfolgt an einem Druckbegrenzungsventil. Dabei saugt die Pumpe über den Filter den verschmutzten Kühlschmierstoff an, bringt ihn auf Druck und stellt ihn dem Verbraucher, üblicherweise ein spanabhebendes Werkzeug, zur Verfügung.

Der Nachteil dieser Anordnung ist, dass bei stark verschmutzten Flüssigkeiten sich die Standzeit des Filters extrem verkürzt und häufig Maschinenstillstände durch Wartungsarbeiten (Filter wechseln) entstehen.

Der in Schutzanspruch 1 angegebenen Erfindung liegt das Problem zugrunde, ein Gerät zu schaffen, das auch bei stark verschmutzten Kühlschmierstoffen eine hohe Standzeit des Filters aufweist.

Dieses Problem wird mit den in Schutzanspruch 1 aufgeführten Merkmalen gelöst.

Mit der Erfindung wird erreicht, dass die groben Schmutzpartikel, die die Flüssigkeit enthält vorabgeschieden werden, und der Saugfilter dem Kühlschmierstoff nur noch den Feinschmutz entziehen muss, was bedeutet, dass das manuelle Reinigen des Saugfilters auf ein Minimum reduziert wird, womit die Wartungsfreundlichkeit des ganzen Gerätes und die Standzeit des Filters deutlich erhöht wird. Vielmehr ist es damit möglich die Reinheit des Kühlschmierstoffes durch Einsatz von noch feineren Saugfiltern zu erhöhen.

Eine Kreiselpumpe (1) saugt die verschmutzte Flüssigkeit der Maschine an und fördert sie in die erste Kammer (2) des Tanksystems. Die Zufuhr erfolgt durch einen im Boden angebrachten Stutzen (3), was verhindert, dass der sich absetzende Schmutz wieder aufgewirbelt wird. Die Flüssigkeit füllt somit diese Kammer und kann erst bei Erreichen der Höhe der Trennwand (Schottblech) (4) in die nächste Kammer fließen. Als besondere Ausführung verfügt diese erste Kammer Ober eine Auflage aus Filtervlies (5), das in Übertrittshöhe angebracht ist. Dieses muss von der Flüssigkeit von unten her durchströmt werden, so werden grobe Schmutzpartikel zurückgehalten, die sich dann allmählich am Kammerboden absetzen und dort verbleiben. In den folgenden Kammern kann eine weitere Abscheidung der Schmutzpartikel durch Schwerkraftwirkung erzielt werden. In der letzten Kammer (6) der Anordnung kommt die vorgereinigte Flüssigkeit zur Ruhe, aus der diese dann von der Hochdruckpumpe (7) über einen Saugfilter (8) entnommen wird. Dieser zusätzliche Saugfilter dient hierbei zum Schutz der Hochdruckpumpe. Diese Pumpe komprimiert den Kühlschmierstoff und stellt ihn dem Verbraucher, meist einem spanabhebenden Werkzeug, zur Verfügung. Das Befüllen des Tanksystems wird von einem Niveauschalter (9), der sich in der letzten Kammer befindet überwacht und von einer angebauten Elektronik (10) gesteuert. Ebenfalls wird der Verschmutzungsgrad (11) des Filters überwacht. Dadurch wird ein autarkes Arbeiten der Anlage ermöglicht. Die elektrische Schnittstelle dient zur Kommunikation mit einer übergeordneten Maschinensteuerung und übermittelt den Betriebszustand der Anlage. Die Einstellung des gewünschten Druckes erfolgt an einem Druckbegrenzungsventil (14). Der eingestellte Druck wird am Monometer (15) angezeigt.

Optional kann das Gerät als fahrbare Einheit ausgestattet werden, wozu vier Rollen (12) verwendet werden, wovon zwei als Lenkrollen ausgelegt sind. Zusätzlich ist bei dieser Option ein Bügel (13) angebracht, der als Fahrgriff dient.
Dadurch wird erreicht, dass die Anlage flexibel, auch für mehrere Maschinen eingesetzt werden kann, was ihren Gebrauchswert gegenüber stationären Anlagen erhöht.

Die Erfindung eignet sich für den Einsatz bei Maschinen mit spanabhebenden Werkzeugen, bei denen der Kühlschmierstoff im Zerspanungsprozess erheblich verunreinigt wird.

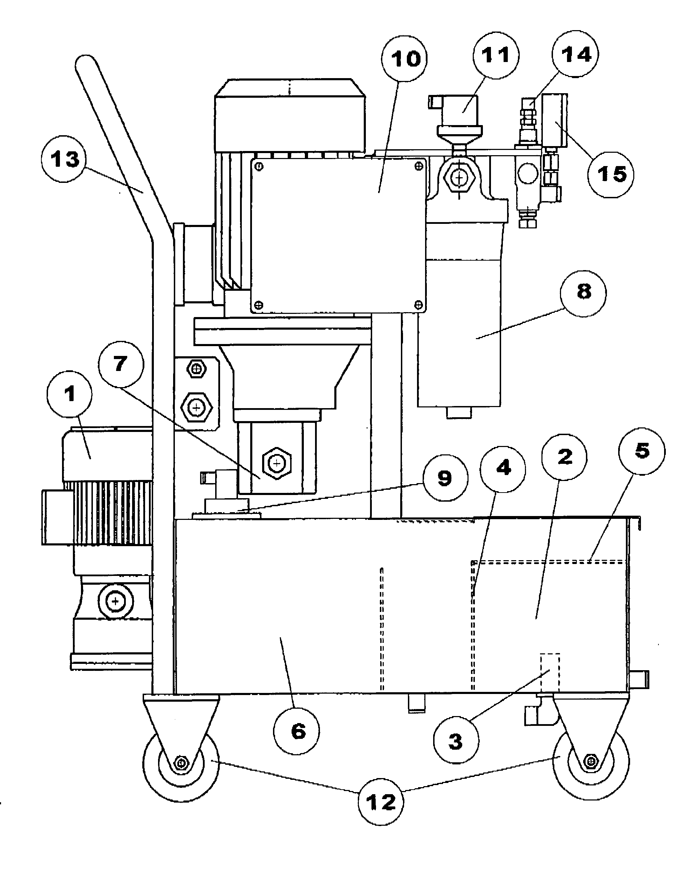

## Patentansprüche

1. Hochdruckanlage für Kühlschmierstoffe,
**dadurch gekennzeichnet,**
**dass** die Hochdruckanlage über einen Tank, der als Mehrkammer-System ausgeführt ist, verfügt, eine separate Pumpe (1) die verschmutzte Flüssigkeit ansaugt, die diese in die erste Kammer (2) des Tanksystems fördert, besitzt und die Hochdruckpumpe (7) die vorgereinigte Flüssigkeit der letzten Kammer (6) des Systems entnimmt.

2. Hochdruckanlage nach Anspruch 1,
**dadurch gekennzeichnet,**
**dass** das Mehrkammer-System über mindestens zwei Kammern verfügt.

3. Hochdruckanlage nach einem der vorhergehenden Ansprüche,
**dadurch gekennzeichnet,**
**dass** die erste Kammer einen Deckel (5) besitzt, der als Filtervlies aus Drahtgeflecht ausgestattet ist, welcher die Flüssigkeit bei Kammerübertritt filtert.

4. Hochdruckanlage nach einem der vorhergehenden Ansprüche,
**dadurch gekennzeichnet,**
**dass** die Zufuhr der Flüssigkeit in die erste Kammer vom Tankboden über einen Stutzen (3) erfolgt, der mindestens eine Länge von 1,0 cm aufweist.

5. Hochdruckanlage nach einem der vorhergehenden Ansprüche,
**dadurch gekennzeichnet.**
**dass** die Kammern mittels Schottblechen (4) voneinander getrennt sind.

6. Hochdruckanlage nach einem der vorhergehenden Ansprüche,
**dadurch gekennzeichnet,**
**dass** die Einheit durch eine angebaute Elektrosteuerung (10) autark arbeitet.

7. Hochdruckanlage nach einem der vorhergehenden Ansprüche,
**dadurch gekennzeichnet,**
**dass** die Einheit fahrbar, mittels vier Rollen (12) und einen Fahrgriff (13) aufgebaut ist, wobei zwei Rollen als Lenkrollen ausgeführt sind.
